# EUROPÄISCHE PATENTSCHRIFT

(11) **EP 1 947 421 B1**
(45) Veröffentlichungstag und Bekanntmachung des Hinweises auf die Patenterteilung: **28.08.2013**
(21) Anmeldenummer: 07122287.1
(22) Anmeldetag: 04.12.2007
(51) Int. Cl.: G01C 21/36, G08G 1/0968

(54) **Verfahren zur Ausgabe von Abbiegehinweisen und Navigationsvorrichtung**
Method for providing turning instructions and navigational device
Procédé d'émissions de directives pour tourner et dispositif de navigation

(30) Priorität: 18.01.2007 DE 102007002736
(43) Veröffentlichungstag der Anmeldung: 23.07.2008
(73) Patentinhaber: ROBERT BOSCH GMBH, 70442 Stuttgart (DE)
(72) Erfinder: Jung, Thomas, 33613 Bielefeld (DE)

(56) Entgegenhaltungen:
- EP-A- 1 528 362
- DE-A1- 3 640 109
- US-A1- 2003 191 580

## Beschreibung

### Stand der Technik

Die Erfindung geht aus von einem Verfahren zur Ausgabe von Abbiegehinweisen und einer Navigationsvorrichtung nach Gattung der unabhängigen Ansprüche. Aus der DE 100 32 921 A1 ist ein Verfahren zur Ermittlung und Ausgabe von Fahrhinweisen bekannt, bei dem in Abhängigkeit von einer geographischen Position eine Fahranweisung an einen Fahrer eines Kraftfahrzeugs ausgegeben wird. Wird ein derartiger Abbiegehinweis von einer Navigationsvorrichtung ausgegeben, so erfolgt eine entsprechende Ausgabe derart, dass mit einem hinreichenden Abstand von beispielsweise 500 m vor einer Kreuzung bereits ein erster Hinweis auf ein zukünftig vorzunehmendes Abbiegen ausgegeben wird. Kurz vor oder mit Erreichen der Kreuzung, beispielsweise in einem Bereich von weniger als 100 m vor der Kreuzung, wird der Fahrer erneut zu einem Abbiegevorgang aufgefordert.

Aus der EP 15 283 62 A1 ist eine Navigationsvorrichtung mit einer Sprachausgabesteuerung bekannt, bei der eine Ausgabe eines Sprachhinweises zur Führung entlang einer berechneten Route in Abhängigkeit von einer vorgegebenen Bedingung erfolgt. Die Bedingung kann dabei durch den Fahrer vorgegeben werden. Ferner kann eine Sprachausgabe beispielsweise in Abhängigkeit von der Fahrzeuggeschwindigkeit, einem Zeitpunkt einer zuletzt ausgegebenen Warnung oder einer Routenneuberechnung erfolgen.

Aus der US 2003/0191580 A1 ist eine optische Fahrtroutenausgabe bekannt, bei der die Grafik einer Kreuzungsdarstellung in Abhängigkeit davon erfolgt, welche Kreuzungsart vorliegt.

Aus der DE 36 40 109 A1 ist ein Leitsystem für ein Fahrzeug innerhalb eines Straßennetzes bekannt. Hierbei werden dem Fahrer vereinfachte, übersichtliche Richtungsinformationen gezeigt.

### Offenbarung der Erfindung

### Vorteile der Erfindung

Das erfindungsgemäße Verfahren mit den Merkmalen des Anspruchs 1 hat demgegenüber den Vorteil, dass eine Ausgabe eines Fahrhinweises kurz vor oder mit Erreichen der Kreuzung nach wenigstens einem zuvor bereits gegebenen Hinweis auf den vorzunehmenden Abbiegevorgang nur dann erfolgt, wenn die Kreuzung für den Fahrer kompliziert zu überblicken ist. Umgekehrt bedeutet dies, dass im Fall einer für den Fahrer einfach zu überblickenden, einfach strukturierten Kreuzung ein erneuter Hinweis mit dem Abbiegevorgang unterbleibt. Durch das Unterdrücken einer weiteren Sprachausgabe für diesen Vorgang, wird die Belastung des Fahrers verringert und er kann sich unmittelbar auf den Abbiegevorgang konzentrieren, ohne dass er durch eine Sprachausgabe gestört wird. Durch das Ausblenden von für den Fahrer nicht wichtigen Sprachinformationen, wird zudem die Nutzerakzeptanz einer entsprechenden Ausgabe von Abbiegehinweisen erhöht, da sich der Fahrer nicht durch unnötige Sprachausgaben belästigt fühlt.

Als weiteres Plausibilitätskriterium wird die Fahrzeuggeschwindigkeit berücksichtigt. Für einen Abbiegevorgang ist es im Allgemeinen erforderlich, die Fahrzeuggeschwindigkeit zu reduzieren. Dies trifft nicht nur für Landstraßen, sondern im Allgemeinen auch für Schnellstraßen und Autobahnen zu. Wird eine Verminderung der Fahrzeuggeschwindigkeit erfasst, ist zusätzlich mit größerer Sicherheit davon auszugehen, dass der zuvor ausgegebene Abbiegehinweis verstanden und in eine richtige Fahrhandlung umgesetzt wird.

Durch die in den abhängigen Ansprüchen aufgeführten Maßnahmen sind vorteilhafte Weiterbildungen und Verbesserungen des in dem unabhängigen Anspruch angegebenen Verfahrens und der in dem unabhängigen Anspruch angegebenen Navigationsvorrichtung möglich. Vorteilhaft kann als ein zusätzliches Plausibilitätskriterium herangezogen werden, ob eine Fahrtrichtungsanzeige in diejenige Richtung bereits gesetzt ist, in die ein erster Abbiegehinweis ausgegeben wurde. In diesem Fall kann davon ausgegangen werden, dass der Fahrer den Abbiegehinweis gehört und verstanden und für einen Abbiegevorgang auch bereits begonnen hat, die Anweisung in eine Fahrhandlung umzusetzen. Eine nochmalige Ausgabe des Abbiegehinweises kann aufgrund dieser Bestätigung unterbleiben. Durch die Bestätigung über die Fahrtrichtungsanzeige wird eine zusätzliche Sicherheit für den Fall geschaffen, dass eine Sprachausgabe unterbleiben soll. Denn nun kann mit höherer Sicherheit von dem tatsächlichen Abbiegewillen des Fahrers in die richtige Richtung ausgegangen werden.

Ferner ist es vorteilhaft, insbesondere in einem Bereich von weniger als 100 m vor dem Abbiegepunkt einen Abbiegehinweis nur noch bei Bedarf auszugeben und ansonsten zu unterdrücken, da bei einem solchen Abstand im Allgemeinen ein Abbiegevorgang bereits eingeleitet hätte werden müssen.

Besonders vorteilhaft ist die Anwendung für diejenigen Fälle, bei denen bei einer berechneten Fahrtroute nur dann Abbiegehinweise ausgegeben werden, wenn von einer bereits befahrenen Hauptstraße abgewichen wird. Hierdurch kann die Anzahl der ausgegebenen Abbiegehinweise an den Fahrer weiter reduziert und damit die Fahrleitung des Fahrers durch die Navigationsvorrichtung angenehmer gestaltet werden.

### Kurze Beschreibung der Zeichnungen

Ausführungsbeispiele der Erfindung sind in den Zeichnungen dargestellt und in der nachfolgenden Beschreibung näher erläutert. Es zeigen:
- Figur 1: eine erfindungsgemäße Navigationsvorrichtung,
- Figur 2: ein erfindungsgemäßes Verfahren zur Ausgabe von Abbiegehinweisen vor Kreuzungen als Ablaufdiagramm,
- Figuren 3 bis 6: Beispiele für die Erkennung der Komplexität sowie der optionalen Berücksichtung der Fahrzeuggeschwindigkeit jeweils mit der Ausgabe eines zusätzlichen Abbiegehinweises in einem Bereich kurz vor oder mit Erreichen der Kreuzung und ohne die Ausgabe eines solchen Hinweises.

### Ausführungsformen der Erfindung

Die vorliegende Erfindung ist insbesondere für Kraftfahrzeuge vorteilhaft einsetzbar, die in einem Straßennetz bewegt werden. Die erfindungsgemäßen Vorteile ergeben sich insbesondere bei der Ausgabe von Sprachanweisungen, da diese einen Fahrer mehr belasten, als Ausgaben anderer Art, wie beispielsweise haptische oder optische Ausgaben. Daher ist die vorliegende Erfindung im Folgenden am Beispiel einer Sprachausgabe von Abbiegehinweisen erläutert.

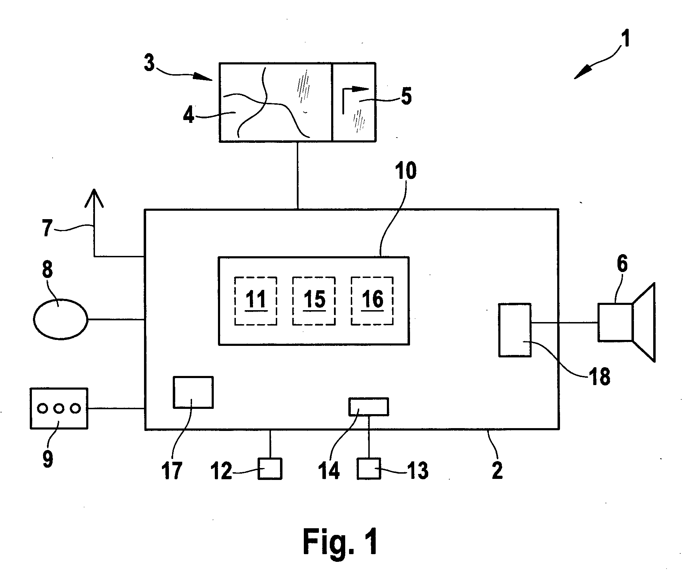

In der Figur 1 ist eine Navigationsvorrichtung 1 gezeigt, die in einem Kraftfahrzeug angeordnet ist. Die Navigationsvorrichtung 1 weist eine Zentraleinheit 2 auf, an die in einer bevorzugten Ausführungsform eine Anzeigeeinheit 3 zur Darstellung eines Kartenbildes 4 und zur Darstellung eines Richtungspfeils 5 angeschlossen ist. Ferner ist die Zentraleinheit 2 mit einem Lautsprecher 6 verbunden, über den Abbiegehinweise in gesprochener Form an den Fahrer ausgegeben werden. Ferner ist eine Ortungseinheit 7 zur Bestimmung einer Position des Fahrzeugs, vorzugsweise über eine Satellitenortung, mit der Zentraleinheit 2 verbunden. Ferner ist eine Speichereinrichtung 8, in der Daten eines Straßennetzes abgelegt sind, mit der Zentraleinheit 2 verbunden. Die Speichereinrichtung 8 ist beispielsweise als ein Datenträgerlaufwerk mit eingelegtem Datenträger ausgeführt. Über eine Eingabeeinrichtung 9 kann die Navigationsvorrichtung 1 gesteuert und insbesondere ein Fahrziel in die Navigationsvorrichtung 1 eingegeben werden. Eine Recheneinheit 10 der Navigationsvorrichtung 1 bestimmt eine Fahrtroute von der über die Ortungseinheit 7 bestimmten aktuellen Position zu dem eingegebenen Fahrziel unter Zugriff auf die Speichereinrichtung 8. Ferner bestimmt die Recheneinheit 10 Fahrhinweise, durch die das Fahrzeug von der aktuellen Position durch das in der Speichereinrichtung 8 abgelegte Straßennetz geführt wird. Für die Routenberechnung kann in der Recheneinheit 10 ein entsprechendes Softwaremodul 11 ausgeführt werden. Über die Ortungseinheit 7 wird während der Fahrt entlang der berechneten Fahrtroute die Position des Fahrzeugs verfolgt. Wird in dem Straßennetz eine Kreuzung erreicht, an dem das Fahrzeug abbiegen muss, so wird ein Abbiegehinweis, bevorzugt in gesprochener Form, über den Lautsprecher 6 ausgegeben. Die Recheneinheit 10 veranlasst hierzu die Ausgabe von Abbiegehinweisen in Sprachform, die von einer Spracherzeugungseinheit 18 erzeugt und an den Lautsprecher 6 weitergegeben werden. Hierbei werden beispielsweise Ausgabe wie "Nach 500 m rechts abbiegen", "In 300 m rechts halten" oder "Jetzt links abbiegen" erzeugt und ausgegeben. Ergänzend kann auch ein Richtungspfeil 5 in der Anzeige 3 dargestellt werden. Wird durch die Ortungseinheit 7 während der Fahrt eine Abweichung von der Fahrtroute bestimmt, so ist die Recheneinheit 10 bevorzugt dazu ausgelegt, die Route neu zu berechnen und damit auch entsprechend die Ausgabe von Fahranweisungen gegebenenfalls zu verändern.

Ferner ist die Zentraleinheit 2 mit einer Sensoreinrichtung 12 zur Überwachung der Fahrtrichtungsanzeige des Fahrzeugs verbunden. Ist der Blinker gesetzt worden, wird dies von dem Sensor 12 erfasst und an die Recheneinheit 10 übermittelt. Ferner ist die Navigationsvorrichtung 1 in einer weiteren Ausführungsform mit einem Geschwindigkeitssensor 13 verbunden, über den eine Fahrzeuggeschwindigkeit, beispielsweise durch die zeitliche Ableitung eines Wegsensorsignals bestimmt wird. Dem Geschwindigkeitssensor 13 ist bevorzugt ein flüchtiger Speicher 14 zugeordnet, in dem ein Geschwindigkeitsprofil, beispielsweise für die jeweils letzten 30 Sekunden der Fahrt des Fahrzeugs, abgelegt werden. Durch eine zeitliche Speicherung der aktuellen Fahrzeuggeschwindigkeit, beispielsweise jeweils nach fünf Sekunden, ist es möglich, ein kurzzeitiges Geschwindigkeitsprofil des Fahrzeugs zu bestimmen. Insbesondere kann hierdurch eine Verzögerung des Fahrzeugs von der Recheneinheit 10 erfasst werden.

Zur Bewertung einer Komplexität einer Kreuzung ist ein Auswertungsalgorithmus 15 ebenfalls als ein Softwaremodul in der Recheneinheit 10 ausführbar. Die Komplexität der Kreuzung wird dabei beispielsweise in Abhängigkeit von der Form der Kreuzung, der Nähe einer abbiegenden Straße zu anderen, von der Hauptstraße abbiegenden Straßen oder von einem Winkel der abbiegenden Straße zu der Hauptstraße, sowie von einer vorhandenen Vorfahrtsregelung abhängig gemacht werden. Unter einer Kreuzung im Sinne der vorliegenden Erfindung sollen hierbei auch Ausfahrten von Schnellstraßen und Autobahnen, sowie Kreisverkehre mit verstanden werden. In einer Ausgestaltung wird eine Kreuzung nach verschiedenen Kriterien als Komplex oder als Nichtkomplex bewertet. Erfüllt die Kreuzung für eines der angeführten Kriterien das Kriterium als komplexe Kreuzung, so wird die Kreuzung als komplexe Kreuzung gewertet. Ist keines der Kriterien für eine komplexe Kreuzung erfüllt, so wird die Kreuzung als nichtkomplexe Kreuzung bewertet.

Ein erstes Kriterium für die Komplexität einer Kreuzung ist beispielsweise der Abstand einer abbiegenden Straße zu anderen, in die gleiche Richtung von der Hauptstraße abbiegenden Straße. Sind in einem Abstand von weniger als 50 m vor oder hinter derjenigen Straße, in die der Fahrer abbiegen soll, weitere Straßen an der Straße, von der der Fahrer abbiegen soll, angeordnet, so wird gemäß diesem Kriterium die Kreuzung als Komplex angesehen, andernfalls als Nichtkomplex. Laufen in einer Kreuzung beispielsweise mehr als fünf Straßen zusammen, so wird die Kreuzung gemäß einem weiteren Kriterium als Komplex angesehen, ansonsten als Nichtkomplex. Gemäß einem dritten Kriterium wird eine Kreuzung dann als Komplex angesehen, wenn wenigstens eine Straße in einem Winkel von mehr als 130° zu der Richtung verläuft, in der das Fahrzeug in die Kreuzung einfährt, wobei Kreisverkehre bei diesem Kriterium ausgenommen werden. Andernfalls wird die Kreuzung als Nichtkomplex gemäß diesem Kriterium angesehen. Ferner kann auch gemäß einem weiteren Kriterium die Kreuzung dann als Komplex angesehen werden, wenn mehrere Fahrspuren in die gewünschte Richtung führen, andernfalls als Nichtkomplex. Die genannten Kriterien können in beliebiger Weise für die Komplexitätsbewertung kombiniert verwendet werden. Es können alternativ oder ergänzend hierzu auch andere Kriterien für eine Komplexitätsbewertung einer Kreuzung herangezogen werden.

Ferner ist als ein weiteres Softwaremodul 16 ein Prüfprogramm zur Unterdrückung oder zur Veranlassung der Ausgabe von Abbiegehinweisen vorgesehen, das in Abhängigkeit von dem Ergebnis der Komplexitätsbewertung des Softwaremoduls 15 und des Geschwindigkeitssensors 13 sowie gegebenenfalls des Fahrtrichtungssensors 12 die Ausgabe eines Abbiegehinweises kurz vor oder mit Erreichen der Kreuzung veranlasst bzw. unterdrückt.

Die Softwaremodule 11, 15, 16 sind beispielsweise in einem nichtflüchtigen Speicher 17 der Navigationsvorrichtung 1 in der Zentraleinheit 2 abgelegt und können von der Recheneinheit 10 bei Bedarf geladen werden.

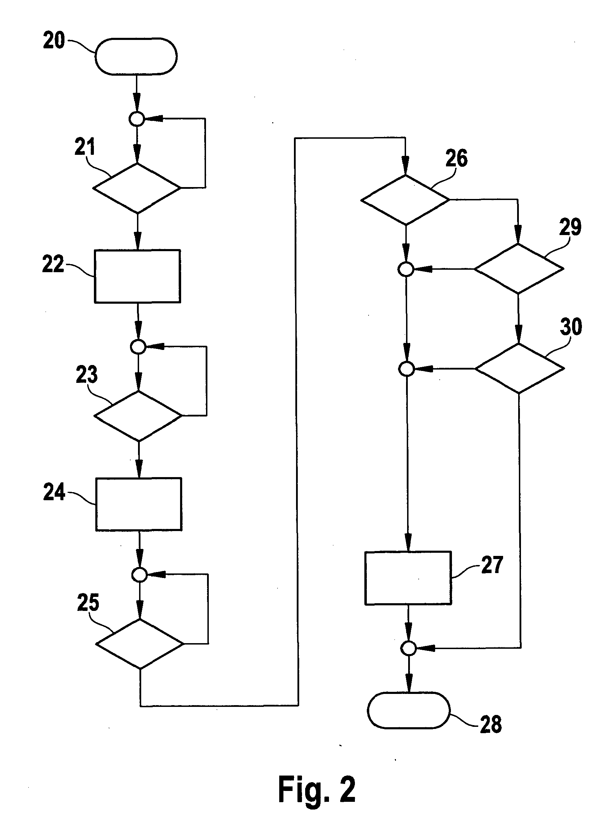

In der Figur 2 ist ein erfindungsgemäßes Verfahren zur Ausgabe von Sprachanweisungen in einem Fahrzeug angegeben. Ausgehend von einem Initialisierungsschritt 20 wird das Verfahren dann initialisiert, wenn sich das Fahrzeug einer Kreuzung annähert und beispielsweise einen Abstand von ca. 1 km zu der Kreuzung erreicht hat. In einem ersten Prüfschritt 21 wird anschließend überprüft, ob eine erste Abstandsschwelle zu der Kreuzung von beispielsweise 500 m unterschritten wurde. Ist dies nicht der Fall, so wird zu dem ersten Prüfschritt 21 zurückverzweigt. Wird die erste Abstandsschwelle unterschritten, so wird in einem anschließenden ersten Ausgabeschritt 22 ein erster Hinweis auf den vorzunehmenden Abbiegevorgang ausgegeben, beispielsweise der Hinweis: "In 500 m rechts abbiegen".

Werte für die erste und die weiteren Abstandsschwellen können dabei einerseits fest vorgegeben sein, aber andererseits auch in Abhängigkeit von der aktuellen Fahrzeuggeschwindigkeit und/oder der aktuell befahrenen Straßenklasse vorgegeben werden. So beträgt die erste Abstandsschwelle beispielsweise bei Geschwindigkeiten von unter 100 km/h 500 m und bei Geschwindigkeiten von mehr als 100 km/h 800 m. Entsprechend kann die Schwelle auch auf der Autobahn 1 km und auf anderen Straßen 500 m betragen.

Nach dem ersten Ausgabeschritt 22 wird zu einem zweiten Prüfschritt 23 weiterverzweigt. In dem zweiten Prüfschritt 23 wird in einer Ausgestaltung der Erfindung überprüft, ob noch ein zweiter Hinweis auf den Abbiegevorgang vor Erreichen des Bereichs der Kreuzung ausgegeben wird. In diesem Ausführungsbeispiel würden also bei einem Abbiegevorgang - sofern die Straße, von der abgebogen wird, vor dem Abbiegen wenigstens für eine der ersten Abstandsschwelle entsprechende Strecke befahren wird - wenigstens zwei Abstandshinweise ausgegeben. Bei Vorlage einer komplexen Kreuzung würde also ein weiterer, dritter Abbiegehinweis kurz vor oder mit Erreichen der Kreuzung ausgegeben. Der zweite Hinweis wird in einem zweiten Ausgabeschritt 24 dann ausgegeben, wenn eine zweite Abstandsschwelle unterschritten wird. Die zweite Abstandsschwelle kann beispielsweise einen Abstand von 300 m zu der Kreuzung sein. Sie weist vorzugsweise mindestens einen Abstand von 100 m zu dem Bereich eines Erreichens der Kreuzung auf, also zu der dritten Abstandsschwelle 44. Wird in dem zweiten Prüfschritt 23 festgestellt, dass die zweite Abstandsschwelle nicht unterschritten wurde, so wird zu dem zweiten Prüfschritt 23 zurückverzweigt. Wird dagegen festgestellt, dass die zweite Abstandsschwelle unterschritten wurde, so wird zu dem zweiten Ausgabeschritt 24 verzweigt, in dem dann entsprechend ausgegeben wird: "In 300 m nach rechts abbiegen".

In einer anderen Ausführung der Erfindung können die Schritte 23 und 24 aber auch ausgelassen werden.

Es schließt sich ein dritter Prüfschritt 25 an, in dem überprüft wird, ob eine dritte Abstandsschwelle 44 für eine Annäherung unterschritten wird. Diese dritte Schwelle beschreibt denjenigen Bereich, der mit oder kurz vor Erreichen der Kreuzung vom Fahrzeug befahren wird. Die dritte Schwelle liegt damit in einem Abstandsbereich von 0 m bis 100 m zu der Kreuzung. Bevorzugt hat die dritte Schwelle einen Wert von 30 m für den innerstädtischen Bereich, von 50 m für die Landstraße und von 100 m für die Autobahn. Wird die dritte Abstandsschwelle noch nicht unterschritten, so wird zu dem dritten Prüfschritt 25 zurückverzweigt. Wird dagegen die dritte Schwelle unterschritten, so wird erfindungsgemäß zu einem vierten Prüfschritt 26 verzweigt, in dem die Komplexität der Kreuzung überprüft wird. Für den Fall, dass bei der Komplexitätsbewertung mittels dem Softwaremodul 15 festgestellt wird, dass die Kreuzung komplex ist und somit für den Fahrer die Fahrsituation nicht eindeutig erkennbar ist, so wird unmittelbar zu einem dritten Ausgabeschritt 27 verzweigt, in dem beispielsweise gemäß dem Ausführungsbeispiel ausgegeben wird: "Jetzt rechts abbiegen". Mit der anschließenden Durchführung des Abbiegevorgangs ist die Ausgabe des Fahrhinweises für das Abbiegen beendet, so dass auch das Verfahren mit einem Endschritt 28 abgeschlossen wird.

Wird dagegen in dem vierten Prüfschritt 26 festgestellt, dass die Kreuzung gemäß der oben erläuterten Komplexitätsbewertung nicht komplex und somit die Fahrsituation für den Fahrer eindeutig erkennbar ist, so wird gemäß einer ersten Ausführungsform unmittelbar zu dem Endschritt 28 weiterverzweigt.
Gemäß dem in der Figur 2 gezeigten Ausführungsbeispiel wird in diesem Fall jedoch zunächst zu einem fünften Prüfschritt 29 weiterverzweigt. In dem fünften Prüfschritt 29 wird durch Abfrage des Fahrtrichtungssensors 12 überprüft, ob die Fahrtrichtungsanzeige bereits in diejenige Richtung, in die das Abbiegen durchgeführt werden soll, gesetzt ist. Ist dies nicht der Fall, so hat der Fahrer möglicherweise die zuvor ausgegebene Fahranweisung nicht richtig verstanden und es wird von dem fünften Prüfschritt 29 zu dem dritten Ausgabeschritt 27 weiterverzweigt. Wird dagegen festgestellt, dass die Fahrtrichtungsanzeige in die richtige Richtung, in die das Abbiegen durchgeführt werden soll, gesetzt wurde, so wird zu einem sechsten Prüfschritt 30 weiterverzweigt. In dem sechsten Prüfschritt 30 wird überprüft, ob die Fahrzeuggeschwindigkeit bereits reduziert wurde.

In einer bevorzugten Ausführungsform wird davon ausgegangen, dass eine signifikante Reduktion der Geschwindigkeit dann vorliegt, wenn die vorherige Geschwindigkeit um mindestens 20 % gegenüber der zuvor gefahrenen Geschwindigkeit reduziert wurde. In einer weiteren Ausführungsform können für die Geschwindigkeitsüberprüfung auch feste Grenzwerte vorgegeben sein. Bevorzugt sind diese Grenzwerte in Abhängigkeit von der befahrenen Straßenklasse gewählt. Die Straßenklasse kann dabei durch eine Auswertung derjenigen Straße ermittelt werden, auf der das Fahrzeug fährt, wobei die Information über die Straßenklasse mittels des in der Speichereinrichtung 8 abgelegten Straßennetzes ermittelt wird. Wird festgestellt, dass die Geschwindigkeit reduziert wurde bzw. dass eine vorgegebene Grenzgeschwindigkeit unterschritten wurde, so erfolgt keine Ausgabe eines weiteren Abbiegehinweises und es wird unmittelbar von dem sechsten Prüfschritt 30 zu dem Endschritt 28 verzweigt. Wird dagegen die vorgegebene Geschwindigkeitsgrenze überschritten, bzw. wird keine Geschwindigkeitsreduzierung festgestellt, so wird von dem sechsten Prüfschritt 30 zu dem dritten Ausgabeschritt 27 verzweigt.

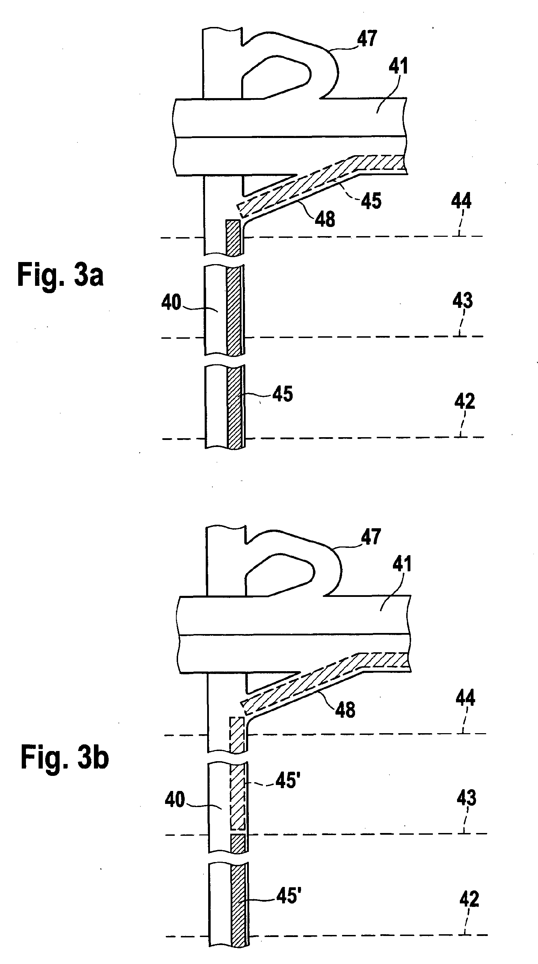

In den Figuren 3a und 3b ist jeweils eine Autobahnauffahrt dargestellt, bei der ein Fahrzeug von einer Landstraße 40 auf eine Autobahn 41 auffährt. Durch gestrichelte Linien sind jeweils die Abstandsschwellen für die erste Anweisung 42, für die zweite Anweisung 43 und für die dritte Anweisung 44 dargestellt. Ferner ist die Fahrstrecke des Fahrzeugs 45 in der Figur 3a und 45' in der Figur 3b dargestellt. Die Strecke des Fahrzeugs ist dabei durchgehend dargestellt für den Fall, dass kein Blinker nach rechts gesetzt ist und gestrichelt dargestellt für den Fall, dass ein Blinker nach rechts gesetzt wurde. Die dritte Abstandsschwelle 44 ist dabei beispielsweise 50 m vor der Auffahrt, die zweite Schwelle 43 300 m vor der Auffahrt und die erste Schwelle 42 600 m vor der Auffahrt positioniert. Da von der Landstraße nur eine Straße abzweigt und die weitere Auffahrt 47 in die Gegenrichtung auf die Autobahn 41 mehr als 100 m hinter der Auffahrt 48 auf die Autobahn 41 in die gewünschte Richtung angeordnet ist, kann der Fahrer die Situation eindeutig erfassen und die Kreuzung wird als Nichtkomplex angesehen. Läge die weitere Auffahrt 47 in die Gegenrichtung näher an der Auffahrt 48 und in die gewünschte Fahrtrichtung, so könnte die Kreuzung dagegen als Komplex angesehen werden. In einem ersten Beispiel würde also bei einer nicht als Komplex angesehenen Kreuzung die dritte Anweisung bei Erreichen der dritten Abstandsschwelle 44 nicht mehr ausgegeben, wenn außer der Komplexität der Kreuzung keine weiteren Informationen zu einer Entscheidung über die Ausgabe des Fahrhinweises herangezogen werden.

In einem weiteren Beispiel wird auch eine Betätigung der Fahrtrichtungsanzeige berücksichtigt. Wenn gemäß der zusätzlichen Auswertung der Fahrtrichtungsanzeige entsprechend der in der Figur 3b gezeigten Situation festgestellt wird, dass der Fahrzeugblinker nach rechts gesetzt ist, wird keine Fahranweisung mehr an den Fahrer des Fahrzeugs ausgegeben. Ein Setzen des Fahrzeugblinkers nach rechts ist aus der gestrichelten Linie der Fahrspurdarstellung 45' ersichtlich. Gemäß der Situation nach der Figur 3a wird jedoch eine Fahranweisung ausgegeben, da bei Erreichen der dritten Abstandsschwelle 44 der Fahrzeugblinker nach rechts noch nicht gesetzt wurde. Die Anweisung wird nunmehr ausgegeben, so dass der Fahrer noch reagieren und in der empfohlenen Fahrrichtung auf die Autobahn 41 auffahren kann.

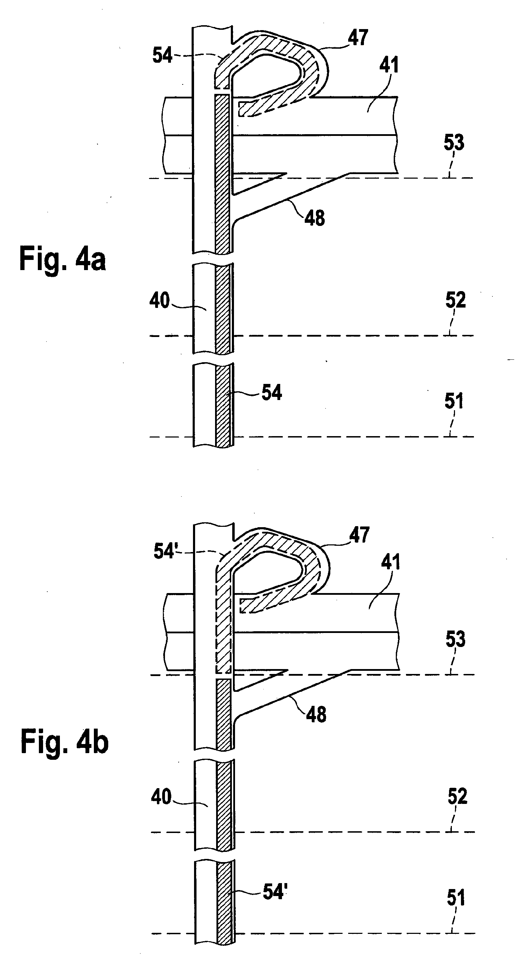

Entsprechend ist die Situation in der Figur 4a für ein Auffahren von der Landstraße 40 auf die Autobahn 41 gemäß der Auffahrt 47 in die Gegenrichtung dargestellt. In diesem Beispiel verschiebt sich die Lage der Abstandsschwellen. Sowohl eine erste Abstandsschwelle 51, als auch eine zweite Abstandsschwelle 52 liegen entsprechend näher an dem Verlauf der Autobahn 41. Die dritte Abstandsschwelle 53 wird dabei bevorzugt so gewählt, dass eine dritte Anweisung zum Abbiegen erst nach dem Passieren der ersten Auffahrt 48 ausgegeben wird. Auch in diesem Ausführungsbeispiel sind die Fahrspuren des Fahrzeugs 54, 54' in den Verlauf der Fahrbahn 40, 47, 41 eingetragen. Wie bereits anhand der Figuren 3a, 3b erläutert, ist aufgrund des großen Abstandes der beiden Auffahrten 47, 48 die Situation für den Fahrer als eindeutig anzusehen. Da jedoch die dritte Abstandsschwelle relativ kurz hinter der vorherigen Auffahrt 48 liegt, wird ein Unterbleiben der Ausgabe der Anweisung an der dritten Abstandsschwelle 53 nur dann erfolgen, wenn der Fahrer nach dem Passieren der Auffahrt 48 sehr schnell den Blinker setzt, wie es in der Figur 4b dargestellt ist. Ansonsten wird, wie es in der Figur 4a dargestellt ist, die dritte Anweisung mit Erreichen der dritten Abstandsschwelle 53 an den Fahrer ausgegeben.

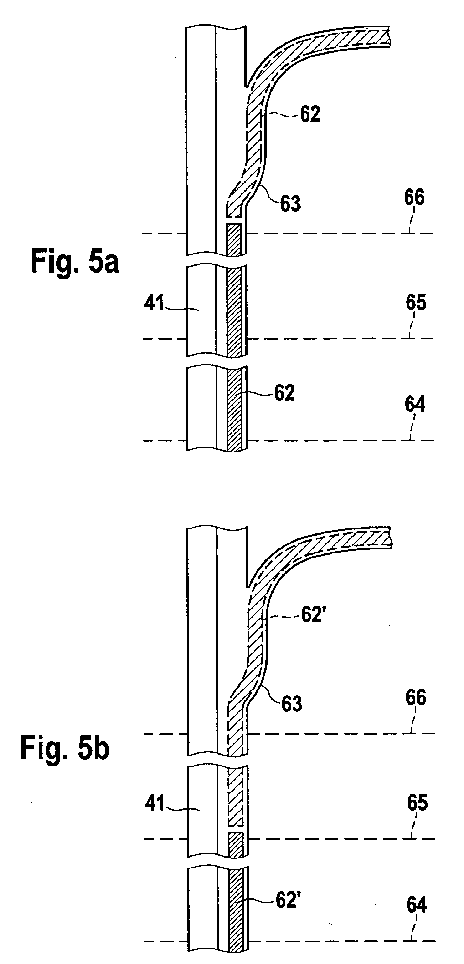

In den Figuren 5a, 5b ist ein Beispiel für ein Abfahren von der Autobahn 41 dargestellt. Entsprechend sind Fahrspuren 62, 62' eines Fahrzeugs mit Hervorhebung einer Fahrstrecke mit gesetztem Blinker mit gestrichelter Linie und mit durchgezogener Linier mit nicht gesetztem Blinker dargestellt. Entsprechend sind vor der Autobahnausfahrt 63 drei Abstandsschwellen gekennzeichnet. Eine erste Abstandsschwelle 64 befindet sich 1 km vor der Ausfahrt. Eine zweite Abstandsschwelle 65 befindet sich 500 m vor der Ausfahrt. Eine dritte Abstandsschwelle 66 befindet sich 100 m vor der Ausfahrt. Ist bei dem Erreichen der dritten Abstandsschwelle 66 bereits ein Blinker gesetzt, so wird gemäß der Figur 5b ein dritter Fahrhinweis nicht mehr ausgegeben. Gemäß der Figur 5a wird jedoch bei einem Erreichen der dritten Abstandsschwelle ein entsprechender Abbiegehinweis ausgegeben, da zu diesem Zeitpunkt noch kein Blinker gesetzt wurde.

Gemäß dem in den Figuren 5a, 5b dargestellten Beispiel ist die Ausfahrt 63 einfach ausgebildet. Bei einer mehrspurigen Ausfahrt bzw. bei einer Verzweigung in der Ausfahrt könnte die Autobahnausfahrt als Komplex angesehen werden, so dass stets die dritte Anweisung ausgegeben wird.

In einem anderen Beispiel bei einer Nichtberücksichtigung der Blinkerbetätigung wäre es auch möglich, bei einer erkannten, vor dem Fahrzeug liegenden, einfach zu befahrenden Autobahnausfahrt die dritte Anweisung nicht auszugeben.

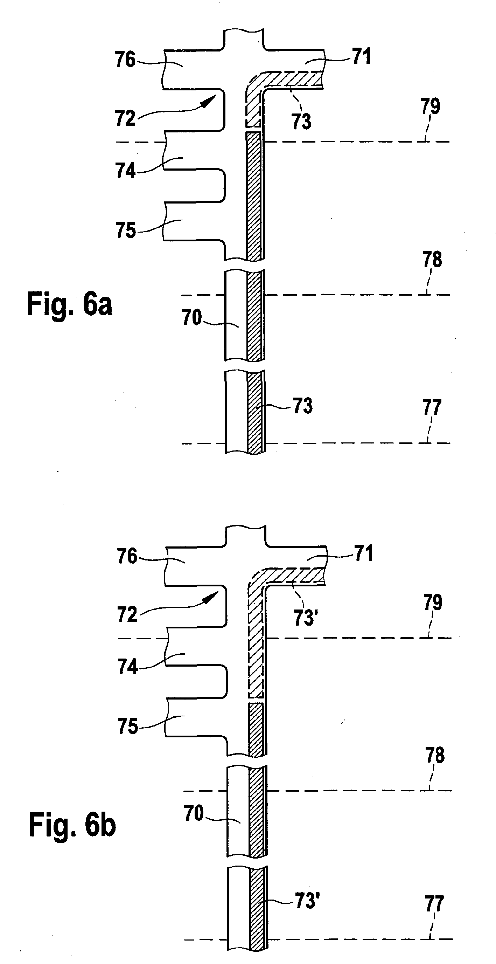

In den Figuren 6a, 6b ist eine Abbiegesituation im Stadtverkehr gezeigt. In dem hier dargestellten Fall bewegt sich ein Fahrzeug in einer Straße 70 und soll nach rechts in eine Straße 71 an einer Kreuzung 72 abbiegen. Entsprechend ist eine Fahrspur 73, 73' des Fahrzeugs in die Figuren 6a und 6b eingetragen. Auch in den Figuren 6a und 6b sind eine erste Abstandsschwelle 77, eine zweite Abstandsschwelle 78 und eine dritte Abstandsschwelle 79 gestrichelt eingezeichnet. Entsprechend den vorherigen Figuren erfolgt eine Kennzeichnung des gesetzten bzw. des nicht gesetzten Blinkers. Vor der Kreuzung 72 biegen zwar einige Straßen 74, 75 nach links ab und mit der Kreuzung 72 auch eine weitere Straße 76, jedoch kann die Straße 71 nach rechts eindeutig durch den Fahrer identifiziert werden. Es liegt daher keine komplexe Kreuzungssituation bei einem Abbiegen nach rechts vor, so dass die Ausgabe eines Abbiegehinweises mit dem Erreichen der Kreuzung unterdrückt wird. Bei einem Abbiegen nach links würde dagegen eine komplexe Kreuzungssituation vorliegen, bei der die letzte Anweisung mit Erreichen oder kurz vor Erreichen der Kreuzung bei einem Abbiegen nach links ausgegeben würde.

In einem anderen Beispiel, bei der lediglich die Komplexität der Kreuzung 72 berücksichtigt wird, würde entsprechend bei einem Abbiegen in eine der Straßen 74, 75, 76 nach links stets die Ausgabe eines Abbiegehinweises nach links ausgegeben, während bei einem Abbiegen nach rechts in die Straße 71 die Ausgabe eines Abbiegehinweises unterdrückt würde.

## Patentansprüche

1. Verfahren zur Ausgabe von Abbiegehinweisen, wobei ein vorzunehmendes Abbiegen ermittelt wird, wobei wenigstens ein erster Abbiegehinweis akustisch ausgegeben wird, wobei der vorzunehmende Abbiegevorgang an einer Kreuzung hinsichtlich seiner Komplexität bewertet wird und wobei ein weiterer Abbiegehinweis mit oder kurz vor Erreichen der Kreuzung dann akustisch ausgegeben wird, wenn ein vorgegebenes Kriterium für die Komplexität des Abbiegevorgangs überschritten wird, **dadurch gekennzeichnet, dass** der weitere Abbiegehinweis mit oder kurz vor Erreichen der Kreuzung auch dann ausgegeben wird, wenn das vorgegebene Kriterium für die Komplexität des Abbiegevorgangs nicht überschritten wird und zusätzlich keine signifikante Verminderung der Fahrzeuggeschwindigkeit erfasst wird.

2. Verfahren nach Anspruch 1, **dadurch gekennzeichnet, dass** der weitere Abbiegehinweis mit oder kurz vor Erreichen der Kreuzung nur dann ausgegeben wird, wenn zusätzlich erfasst wird, dass keine Fahrtrichtungsanzeige in die Richtung des Abbiegens gesetzt ist.

3. Verfahren nach einem der vorhergehenden Ansprüche, **dadurch gekennzeichnet, dass** der weitere Abbiegehinweis mit oder kurz vor Erreichen der Kreuzung nur dann ausgegeben wird, wenn zusätzlich eine vorgegebene Geschwindigkeitsschwelle überschritten wird.

4. Verfahren nach einem der vorhergehenden Ansprüche, **dadurch gekennzeichnet, dass** nach dem ersten Abbiegehinweis ein weiterer Abbiegehinweis akustisch wenigstens 100m vor dem Bereich einer Ausgabe des weiteren Abbiegehinweises, der mit oder kurz vor Erreichen der Kreuzung ausgegeben wird, ausgegeben wird.

5. Navigationsvorrichtung, mit einer Ortungseinheit (7) zur Positionsbestimmung eines Fahrzeugs, mit einer Karteneinheit (8) zur Ermittlung der Position des Fahrzeugs in einem Straßennetz und mit einer Recheneinheit (10) zur Ermittlung von Abbiegehinweisen für das Fahrzeug in dem Straßennetz und zur Veranlassung einer Ausgabe von Abbiegehinweisen vor einem vorzunehmenden Abbiegevorgang, mit einer akustischen Ausgabeeinheit (6, 18) zur Ausgabe von Abbiegehinweisen, **gekennzeichnet durch** eine Bewertungseinheit (10,15) zur Bewertung einer Komplexität einer Kreuzung und mit einer Unterdrückungseinheit (10, 16) zur Unterdrückung einer akustischen Ausgabe eines Abbiegehinweises kurz vor oder mit Erreichen einer Kreuzung für den Fall, dass die Komplexität der Kreuzung eine vorgegebene Komplexitätsschwelle nicht überschreitet und zusätzlich eine signifikante Verminderung der Fahrzeuggeschwindigkeit erfasst wird.

6. Navigationsvorrichtung nach Anspruch 5, **gekennzeichnet durch** eine Fahrtrichtungsanzeigenerfassungseinheit (12) zur Erfassung einer Aktivierung der Fahrtrichtungsanzeige, die derart mit der Unterdrückungseinheit (10, 16) verbunden ist, dass eine Unterdrückung der Ausgabe des Abbiegehinweises nur für den Fall erfolgt, dass die Fahrtrichtungsanzeige in die Richtung des Abbiegens des auszugebenden Abbiegehinweises aktiviert ist.

7. Navigationsvorrichtung nach einem der Ansprüche 5-6, **gekennzeichnet durch** eine Schnittstelle zu einem Wegsensor (13) zur Erfassung einer Fahrzeuggeschwindigkeit, die derart mit der Unterdrückungseinheit (10,16) verbunden ist, dass eine Unterdrückung der Ausgabe des Abbiegehinweises nur für den Fall erfolgt, dass eine vorgegeben Geschwindigkeit nicht überschritten wird.

8. Navigationsvorrichtung nach einem der Ansprüche 5-7, **gekennzeichnet durch** eine Routenberechnungseinheit (10, 11) zur Bestimmung einer Fahrtroute zu einem Zielort in dem Straßennetz und zur Bestimmung von Abbiegehinweisen an denjenigen Kreuzungen in dem Straßennetz, an denen von einer Hauptstraße abgebogen werden muss.

## Claims

1. Method for outputting turn-off advice, wherein a turn-off to be taken is ascertained, wherein at least one first piece of turn-off advice is output audibly, wherein the turn-off manoeuvre to be performed at a junction is rated in respect of the complexity of said manoeuvre and wherein a further piece of turn-off advice is output audibly upon or shortly before reaching the junction when a prescribed criterion for the complexity of the turn-off manoeuvre is exceeded, **characterized in that** the further piece of turn-off advice is also output upon or shortly before reaching the junction when the prescribed criterion for the complexity of the turn-off manoeuvre is not exceeded and additionally no significant decrease in the vehicle speed is detected.

2. Method according to Claim 1, **characterized in that** the further piece of turn-off advice is output upon or shortly before reaching the junction only when it is additionally detected that no direction-of-travel indicator is set in the direction of turn-off.

3. Method according to either of the preceding claims, **characterized in that** the further piece of turn-off advice is output upon or shortly before reaching the junction only when additionally a prescribed speed threshold is exceeded.

4. Method according to one of the preceding claims, **characterized in that** after the first piece of turn-off advice a further piece of turn-off advice is output audibly at least 100 m before the region of output of the further piece of turn-off advice that is output upon or shortly before reaching the junction.

5. Navigation apparatus, having a locating unit (7) for finding the position of a vehicle, having a map unit (8) for ascertaining the position of the vehicle in a road network and having a computation unit (10) for ascertaining turn-off advice for the vehicle in the road network and for prompting output of turn-off advice before a turn-off manoeuvre that is to be performed, having an audible output unit (6, 18) for outputting turn-off advice, **characterized by** a rating unit (10, 15) for rating a complexity of a junction and having a suppression unit (10, 16) for suppressing audible output of a piece of turn-off advice shortly before or upon reaching a junction in the event that the complexity of the junction does not exceed a prescribed complexity threshold and additionally a significant decrease in the vehicle speed is detected.

6. Navigation apparatus according to Claim 5, **characterized by** a direction-of-travel indicator detection unit (12) for detecting activation of the direction-of-travel indicator, which is connected to the suppression unit (10, 16) such that the output of the piece of turn-off advice is suppressed only in the event that the direction-of-travel indicator is activated in the direction of turn-off of the piece of turn-off advice that is to be utput:

7. Navigation apparatus according to either of Claims 5 and 6, **characterized by** an interface to a displacement sensor (13) for detecting a vehicle speed, which is connected to the suppression unit (10, 16) such that the output of the piece of turn-off advice is suppressed only in the event that a prescribed speed is not exceeded.

8. Navigation apparatus according to one of Claims 5-7, **characterized by** a route calculation unit (10, 11) for determining a journey route to a destination in the road network and for determining turn-off advice at those junctions in the road network at which it is necessary to turn off from a main road.

## Revendications

1. Procédé d'émission de directives pour tourner, un virage à prendre étant calculé, au moins une première directive pour tourner étant émise sur le plan acoustique, le processus à mettre en oeuvre pour tourner étant analysé à un croisement par rapport à sa complexité et une directive pour tourner supplémentaire étant ensuite émise sur le plan acoustique à l'arrivée au croisement ou peu avant elle lorsqu'un critère prédéfini de complexité du processus pour tourner est dépassé, **caractérisé en ce que** la directive pour tourner supplémentaire est également émise à l'arrivée au croisement ou peu avant elle également lorsque le critère prédéfini de complexité du processus pour tourner n'est pas dépassé mais qu'en sus, aucune réduction significative de la vitesse du véhicule n'est détectée.

2. Procédé selon la revendication 1, **caractérisé en ce que** la directive pour tourner supplémentaire n'est émise à l'arrivée au croisement ou peu avant elle que lorsqu'on détecte en sus qu'aucun affichage de direction de conduite dans la direction du virage n'est affiché.

3. Procédé selon l'une quelconque des revendications précédentes, **caractérisé en ce que** la directive pour tourner supplémentaire n'est émise à l'arrivée au croisement ou peu avant elle que lorsqu'en sus, un seuil de vitesse prédéfini est dépassé.

4. Procédé selon l'une quelconque des revendications précédentes, **caractérisé en ce qu'**après la première directive pour tourner, une directive pour tourner supplémentaire est émise sur le plan acoustique au moins 100 m avant la zone d'émission d'une directive pour tourner supplémentaire émise à l'arrivée au croisement ou peu avant elle.

5. Dispositif de navigation, avec une unité de localisation (7) permettant de définir la position d'un véhicule, avec une unité cartographique (8) permettant de calculer la position du véhicule dans un réseau routier et avec une unité de calcul (10) permettant de calculer des directives pour tourner pour le véhicule dans le réseau routier et de déclencher une émission de directives pour tourner avant un processus à effectuer pour tourner, avec une unité d'émission (6, 18) acoustique permettant d'émettre des directives pour tourner, **caractérisé par** la présence d'une unité d'analyse (10, 15) permettant d'analyser la complexité d'un croisement et avec une unité de blocage (10, 16) permettant de bloquer l'émission acoustique d'une directive pour tourner juste avant un croisement ou au croisement lorsque la complexité du croisement ne dépasse pas un seuil de complexité prédéfini et qu'une réduction significative de la vitesse du véhicule a en sus été détectée.

6. Dispositif de navigation selon la revendication 5, **caractérisé par** la présence d'une unité de détection d'affichage de direction de conduite (12) permettant de détecter une activation de l'affichage de direction de conduite et reliée de telle sorte à l'unité de blocage (10, 16) qu'un blocage de l'émission de la directive pour tourner ne se produit que lorsque l'affichage de direction de conduite est activé dans la direction de la prise de virage correspondant à la directive émise pour tourner.

7. Dispositif de navigation selon l'une quelconque des revendications 5 à 6, **caractérisé par** la présence d'une interface avec un capteur de course (13) permettant de détecter une vitesse du véhicule et reliée de telle sorte à l'unité de blocage (10, 16) qu'un blocage de l'émission de la directive pour tourner ne se produit que lorsqu'une vitesse prédéfinie n'est pas dépassée.

8. Dispositif de navigation selon l'une quelconque des revendications 5 à 7, **caractérisé par** la présence d'une unité de calcul de trajectoire (10, 11) permettant de déterminer une trajectoire jusqu'à un endroit cible dans le réseau routier et de déterminer des directives pour tourner au niveau des croisements du réseau routier au niveau desquels il est nécessaire de tourner par rapport à une route principale.
